(19) Europäisches Patentamt
European Patent Office
Office européen des brevets

(11) **EP 1 876 428 A1**

(12) **EUROPÄISCHE PATENTANMELDUNG**

(43) Veröffentlichungstag:
**09.01.2008 Patentblatt 2008/02**

(51) Int Cl.:
***G01F 1/84*** *(2006.01)*

(21) Anmeldenummer: **07013081.0**

(22) Anmeldetag: **04.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **04.07.2006 DE 102006031198**

(71) Anmelder: **Krohne AG**
**4019 Basel (CH)**

(72) Erfinder:
• **Kolahi, Kourosh**
**47051 Duisburg (DE)**
• **Storm, Ralf**
**45131 Essen (DE)**

(74) Vertreter: **Gesthuysen, von Rohr & Eggert**
**Patentanwälte**
**Postfach 10 13 54**
**45013 Essen (DE)**

(54) **Verfahren zum Betreiben eines Coriolis-Massendurchflussmessgerätes**

(57) Die Erfindung betrifft ein Verfahren zum Betreiben eines Coriolis-Massendurchflußmeßgerätes, das wenigstens ein Meßrohr aufweist, wobei das Meßrohr mit einer vorbestimmten Anregungsfrequenz und einer vorbestimmten Anregungsphase zu Schwingungen angeregt wird. Erfindungsgemäß ist vorgesehen, daß die dadurch erzielte Antwortphase und die Änderungsgeschwindigkeit der Antwortphase erfaßt werden und die Anregungsfrequenz um einen derartigen Frequenzbetrag geändert wird, der sich mittels einer vorbestimmten Funktion aus der erfaßten Änderungsgeschwindigkeit der Antwortphase ergibt. Damit wird eine Möglichkeit bereitgestellt, eine kontinuierliche Massendurchflußmessung auch dann aufrechtzuerhalten, wenn es zum Auftreten von Zweiphasenströmungen kommt.

Fig. 1

**EP 1 876 428 A1**

## Beschreibung

Die Erfindung betrifft ein Verfahren zum Betreiben eines Coriolis-Massendurchflußmeßgeräts, das wenigstens ein Meßrohr aufweist, wobei das Meßrohr mit einer vorbestimmten Anregungsfrequenz und einer vorbestimmten Anregungsphase zu Schwingungen angeregt wird.

Coriolis-Massendurchflußmeßgeräte weisen im allgemeinen ein einziges Meßrohr oder eine Mehrzahl von Meßrohren auf, durch die ein Medium strömt, dessen Massendurchfluß bestimmt werden soll. So existieren z. B. Coriolis-Massendurchflußmeßgeräte mit einem einzigen geraden Meßrohr sowie Coriolis-Massendurchflußmeßgeräte mit zwei gekrümmt verlaufenden Meßrohren.

Diesen Coriolis-Massendurchflußmeßgeräten ist gemein, daß die vom Medium durchströmten Meßrohre ein mechanisches Schwingungssystem bilden, das durch das strömende Medium beeinflußt wird. So verändert die Dichte des Mediums die Resonanzfrequenz des Schwingungssystems, während die Massendurchflußrate des Mediums die Schwingungsform verändert. Damit kann neben dem Massendurchfluß unter anderem auch die Dichte des strömenden Mediums bestimmt werden.

Coriolis-Massendurchflußmeßgeräte zeichnen sich durch eine hohe Meßgenauigkeit aus. So ist die Messung des Massendurchflusses mit einer Genauigkeit von unter 0,1 % möglich. Darüber hinaus können mit Coriolis-Massendurchflußgeräten neben dem Massendurchfluß weitere Werte bestimmt werden, die zum Teil aus primären Meßwerten abgeleitet werden. Beispiele für solche abgeleiteten Parameter des durch das Meßrohr strömenden Mediums sind der Volumendurchfluß, die Massen- bzw. Volumenmenge sowie die Konzentration des strömenden Mediums. Damit stellen Coriolis-Massendurchflußmeßgeräte multivariable Meßgeräte dar, die häufig nicht nur für eine primäre Meßaufgabe verwendet werden, sondern zusätzlich auch noch wichtige sekundäre Diagnose- und Qualitätsinformationen über einen Prozeß liefern können.

Problematisch bei Coriolis-Massenduchflußmeßgeräten sind Mehrphasenströmungen, wie Zweiphasenströmungen. Beispiele für Mehrphasenströmungen, konkret nämlich für eine Zweierphasenströmung, sind Gasblasen in einer Flüssigkeit, die z. B. verursacht sein können durch Kavitation in Ventilen oder Pumpen oder das Ansaugen von Luft an Undichtigkeiten. Ferner ist ein Beispiel für eine Zweiphasenströmung ein System aus Feststoffen in einer Flüssigkeit, z. B. verursacht durch Kristallisationen oder dem plötzlichen Ablösen von Ablagerungen im Rohleitungssystem, durch das das Medium strömt. Schließlich liegt ein Beispiel für Zweiphasenströmungen in Gemischen nichtlösbarer Flüssigkeiten, also Emulsionen, die, z. B. durch einen Wechsel des durch das Rohrleitungssystems strömenden Mediums verursacht sein können.

Tritt beim Betrieb eines Coriolis-Massendurchflußmeßgerätes eine Mehrphasenströmung auf bzw. ändert sich das Verhältnis der Phasen einer Mehrphasenströmung, so ändert sich im allgemeinen auch die Resonanzfrequenz des von dem Medium durchströmten Meßrohres. Da das Meßrohr typischerweise in einer Resonanzfrequenz angeregt wird, muß somit eine Nachregelung der Schwingungsanregung des Meßrohrs erfolgen. Bei herkömmlichen Verfahren ist dies häufig mit dem Verlust des Arbeitspunktes verbunden, d. h. Frequenz und Phase der Schwingungsanregung müssen neu bestimmt werden, so daß praktische ein Neustart des Coriolis-Massendurchflußmeßgerätes erforderlich ist, Während der Phase des Neustarts ist jedoch keine Massendurchflußmessung möglich.

Es ist daher die Aufgabe der Erfindung, ein derartiges Verfahren zum Betreiben eines Coriolis-Massendurchflußmeßgerätes anzugeben, mit dem ein kontinuierlicher Massendurchflußmeßbetrieb möglich ist, auch wenn es zu Mehrphasenströmungen bzw, zu Änderung der Phasenanteile in einer Mehrphasenströmung kommt.

Ausgehend von dem eingangs beschriebenen Verfahren zum Betreiben eines Coriolis-Massendurchflußmeßgerätes ist diese Aufgabe dadurch gelöst, daß die aufgrund der Schwingungsanregung erzielte Antwortphase und die Änderungsgeschwindigkeit der Antwortphase erfaßt werden und die Anregungsfrequenz um einen derartigen Frequenzbetrag geändert wird, der sich mittels einer vorbestimmten Funktion aus der erfaßten Änderungsgeschwindigkeit der Antwortphase ergibt.

Dieser erfindungsgemäßen Lösung liegt die Erkenntnis zugrunde, daß die Änderungsgeschwindigkeit der Antwortphase eine Funktion der Differenzfrequenz zwischen der Anregungsfrequenz und der tatsächlich vorliegenden Resonanzfrequenz im Anregungsmode ist. Erfindungsgemäß wird diese Erkenntnis ausgenutzt, um die Anregungsfrequenz sehr schnell nachzuführen, so daß der Arbeitspunkt des Coriolis-Massendurchflußmeßgerätes nicht verloren wird.

Gemäß einer bevorzugten Weiterbildung der Erfindung ist ferner vorgesehen, daß die Phasenverschiebung zischen der Anregungsphase und der Antwortphase auf einen vorbestimmten Phasenwert geregelt wird, vorzugsweise nämlich auf einen vorbestimmten Phasenwert von Null.

Die Erfindung betrifft ferner ein Verfahren zum Betreiben eines Coriolis-Massendurchflußmeßgerätes, das wenigstens ein Meßrohr aufweist, wobei das Meßrohr mittels eines Anregungssignals zu Schwingungsanregungen angeregt wird, das dadurch erzeugte Schwingungssignal erfaßt und einer A/D-Wandlung unterzogen wird und das erfaßte Schwingungssignal verwendet wird, um wenigstens einen Parameter eines des Meßrohr durchströmenden Mediums zu bestimmen und um wenigstens einen Parameter der Schwingungsanregung festzulegen.

Zur Lösung der weiter oben angegebenen Aufgabe ist bei diesem Verfahren zum Betreiben eines Coriolis-Massendurchflußmeßgerätes vorgesehen, daß die A/D-Wandlung des Schwingungssignals zur Verwendung für die Bestimmung des Parameters des das Meßrohr strömenden Mediums von der A/D-Wandlung des Schwingungssignals zur Verwendung für die Festlegung des Parameters der Schwingungsanregung unabhängig ist.

Daß die beiden A/D-Wandlungen voneinander "unabhängig" sind, bedeutet im Sinne der Erfindung, daß ihre Parameter getrennt voneinander gewählt werden können. Gemäß einer bevorzugten Weiterbildung der Erfindung ist dabei insbesondere vorgesehen, daß die Zeitkonstante der A/D-Wandlung des Schwingungssignals zur Verwendung für die Bestimmung des Parameters des das Meßrohr durchströmenden Mediums von der Zeitkonstanten der A/D-Wandlung des Schwingungssignals zur Verwendung für die Festlegung des Parameters der Schwingungsanregung verschieden ist. Gemäß einer bevorzugten Weiterbildung der Erfindung ist ferner vorgesehen, daß die Grenzfrequenz der A/D-Wandlung des Schwingungssignals zur Verwendung für die Festlegung des Parameters der Schwingungsanregung größer ist als die Grenzfrequenz der A/D-Wandlung des Schwingungssignals zur Verwendung für die Bestimmung des Parameters des das Meßrohr durchströmenden Mediums,

Die in Rede stehende "Unabhängigkeit" der beiden A/D-Wandlungen kann schließlich gemäß einer bevorzugten Weiterbildung der Erfindung insbesondere dadurch erzielt werden, daß zwei voneinander verschiedene A/D-Wandler oder ein A/D-Wandler mit getrennten Filterstufen oder mit inneren Abgriffen für getrennte Signale verwendet werden.

Die Erfindung betrifft ferner ein Verfahren zum Betreiben eines Coriolis-Massendurchflußmeßgeräts, das wenigstens ein Meßrohr aufweist, wobei das Meßrohr mittels eines wenigstens zeitabschnittsweise periodischen analogen Anregungssignals zu Schwingungen angeregt wird, das dadurch erzielte analoge Antwortsignal erfaßt und mittels einer A/D-Wandlers eine A/D-Wandlung unterzogen wird, so daß ein digitales Antwortsignal bereit gestellt wird, das digitale Antwortsignal zur Bestimmung eines digitalen Anregungssignals verwendet wird und das digitale Anregungssignals mittels eines D/A-Wandler einer D/A-Wandlung unterzogen wird, so daß sich das analoge Anregungssignal ergibt.

Die weiter oben angegebene Aufgabe ist bei diesem Verfahren zum Betreiben eines Coriolis-Massendurchflußmeßgerätes dadurch gelöst, daß der jeweiligen gerätespezifischen Totzeit des A/D-Wandlers bzw, des D/A-Wandlers eine vorbestimmte zusätzliche Totzeit hinzugefügt wird.

Erfindungsgemäß wird also nicht versucht, eine möglichst kurze Totzeit zu realisieren, sondern eine derartige Totzeit einzustellen, mit der sich eine stabile Regelstrecke ergibt. Dabei ist gemäß einer bevorzugten Weiterbildung der Erfindung insbesondere vorgesehen, daß wenigstens eine der Totzeiten derart eingestellt wird, daß sie einem ganzzahligen Vielfachen der halben Periode des Anregungssignals entspricht.

Die Erfindung betrifft auch ein Verfahren zum Betreiben einen Coriolis-Massendurchflußmeßgeräts, das wenigstens ein Meßrohr aufweist, wobei das Meßrohr mittels eines periodischen Anregungssignals zu Schwingungen angeregt wird, das dadurch erzielte Schwingungssignal erfaßt wird und die Amplitude des Schwingungssignals mittels der Amplitude des Anregungssignals als Stellgröße auf einen vorbestimmten Wert geregelt wird.

Die weiter oben angegebene Aufgabe ist bei diesem Verfahren zum Betreiben eines Coriolis-Massendurchflußmeßgeräts dadurch gelöst, daß die Amplitude des Anregungssignals bei den Nulldurchgängen des Anregungssignals eingestellt wird. Auf diese Weise wird der Signal-Rausch-Abstand vergrößert und die Effizienz der Antriebsleistung wird verbessert.

Erfindungsgemäß sind schließlich auch Verfahren vorgesehen, bei denen die Varianz der Betriebsfrequenz und der Antriebsleistung des Coriolis-Massendurchflußmeßgeräts bzw. die Dämpfung des Meßrohres bestimmt werden, um die Reglerparameter automatisch anzupassen.

Im folgenden werden bevorzugte Ausführungsbeispiele der Erfindung unter Bezugnahme auf die Zeichnung im einzelnen erläutert. In der Zeichnung zeigt

Fig. 1    schematisch eine Anregung des Meßrohrs über einen gesteuerten Generator und

Fig. 2    schematisch eine Anregung des Meßrohrs über eine direkte Rückkopplung.

Herkömmliche Massendurchflußmeßgeräte die nach dem Coriolis-Priuzip-abreiten, zeichnen sich im Betrieb mit einphasigen Strömungen bezüglich ihrer Genauigkeit und Zuverlässigkeit aus. Diese Zuverlässigkeit besteht im allgemeinen jedoch nicht bei mehrphasigen Strömungen. Als mehrphasige Strömung versteht man eine Strömung, die sich aus wenigstens zwei Phasen mit voneinander verschiedenen physikalischen Eigenschaften zusammensetzt. Diese Phasen können dabei aus dem gleichen oder aus unterschiedlichen Stoffen bestehen. Als Phasen werden somit homogene und räumlich begrenzte Bereiche der Strömung bezeichnet. Beispiele sind Flüssigkeits-Feststoff-Strömungen, Gas-Flüssigkeits-Strömungen, Gas-Feststoff-Strömungen, Wasser-Dampf-Strömungen und Wasser-Luft-Strömungen. Insbesondere treten mehrphasige Strömungen auch bei Vorgängen, wie dem Befüllen, Entleeren, Prozeßanfahren und Schalten von Ventilen, und bei Quellen in der Strömung auf.

Bei Anwendungen mit mehrphasigen Strömungen treten typischerweise erhebliche Meßfehler auf, Die wesentliche Ursache hierfür ist dabei das Auftreten einer asymmetrischen Befüllung des Meßrohres, die zu einer sehr schnellen Fluktuation der Resonanzfrequenz des durchströmten Meßrohres führt. Ferner haben das Auftreten und Verschwinden von Sekundärströmungen im Meßrohr eine schnelle Dämpfung, nämlich beim Auftreten einer Sekündärströmung, bzw. eine rasche Entdämpfung, nämlich beim Verschwinden einer Sekundärströmung, zur Folge. Grundsätzlich werden Sekundärströmungen durch unterschiedliche Dichten der mehrphasigen Strömungen hervorgerufen.

Durch eine schnelle Dämpfung bzw. Entdämpfung des Meßrohres durch die nichtstationäre Strömung und durch eine gleichzeitige rasche Änderung der Resonanzfrequenz kommt es bei herkömmlichen, relativ langsamen Steuer- und Regelungsverfahren im Vergleich mit der Änderung der Strömung häufig zum Verlust des Arbeitspunktes. Dann reicht auch die maximal verfügbare Leistung nicht mehr aus, die Schwingungen des Meßrohres aufrechtzuerhalten. Die Folge ist, daß keine Coriolis-Kräfte mehr induziert werden, so daß auch der Massenstrom nicht mehr gemessen werden kann. Pumpt man andererseits beim Vorhandensein einer mehrphasigen Strömung Energie in die Schwingungen des, Meßrohres hinein, um die Schwingungen des Meßrohres und damit die Meßbarkeit des Massestroms aufrechtzuerhalten, wird die gesamte Energie beim plötzlichen Aussetzen der mehrphasigen Strömung zur Schwingungsanregung des Meßrohres bei der neuen Resonanzfrequenz dienen, so daß eine vorausschauende Abschaltung zur Vermeidung von Deformationen und Beschädigungen des Meßrohres erforderlich ist. Daraus ergibt sich der Wunsch, über ein derartiges Verfahren zum Betreiben eines Coriolis-Massendurchflußmeßgerätes zu verfügen, das es erlaubt, den Arbeitspunkt auch beim Auftreten von Mehrphasenströmungen nicht zu verlieren.

Die folgende Beschreibung eines bevorzugten Ausführungsbeispiels der Erfindung geht von einem Coriolls-Massendurchflußmeßgerät aus, das ein einziges gerades Meßrohr aufweist, Die Schwingungen dieses Meßrohres kann man vereinfachend durch einen Schwinger für den Antriebsmode mit folgendem physikalisch-mathematischen Modell zweiter Ordnung beschreiben:

$$G_1(s) = \frac{k_1 s}{s^2 + 2\omega_{01} d_1 s + \omega_{01}^2} \qquad (1)$$

Diese Übertragungsfunktion besitzt drei Parameter, nämlich die Federkonstante $c_1$, die schwingende Masse $m_1$ und den Dämpfungskoeffizienten $d_1$. Die Bestimmungsgleichungen lauten:

$$k_1 = \frac{1}{m_1}; \omega_{01} = \sqrt{\frac{c_1}{m_1}} \qquad (2)$$

Die Parameter des Meßrohres $m_1$ und $d_1$ ändern sich durch die merphasige Strömung sehr schnell. Damit liegt entsprechend der Änderung der Schwingungsmasse $m_1$ und des Dämpfungskoeffizientes $d_1$ eine stark zeitvariantes System vor. Das bedeutet, daß die Dynamik der Regelung mit der Dynamik der Änderung des Systems Schritt halten muß, da ansonsten eine Unterbrechung der Messung der Prozeßgrößen unvermeidbar ist.

Die Dynamik der Regelung wird neben dem mechanischen Aufbau des Coriolis-Massendurchflußmeßgerätes von folgenden Punkten bestimmt:

- der Geschwindigkeit, mit der die Lage der aktuellen Resonanzfrequenz berücksichtigt werden kann,

- der Stabilität und das dynamische Verhalten des Coriolis-Massendurchflußmeßgerätes bei den gegebenen Gruppenlaufzeiten bzw. Totzeiten der verwendeten Hardware-Komponenten,

- der effizienten Ausnutzung der verfügbaren Stellgrößen und

- dem Ausmaß, in dem die verwendeten Regelalgorithmen an das Massendurchflußmeßgeräts, angepaßt werden können.

Unter Berücksichtigung dieser Punkte werden im folgenden drei Regelungsmethoden bestimmt, nämlich eine Methode mit erzwungener Anregung, eine Methode mit autonomer Anregung sowie eine Methode mit einer hybriden Anregung, also einer Kombination einer erzwungener Anregung mit einer autonomen Anregung. Aus Gründen der Übersichtlichkeit wird dabei das Modell des Meßgerätes zum Zwecke der Regelung soweit vereinfacht, daß es durch das Verhalten des Antriebsmodes durch die Übertragungsfunktion (Gleichung 1) wiedergegeben werden kann. Das heißt, daß die anderen Eigenformen, wie der Coriolis-Mode und die Kopplungen zwischen den vorhandenen Eigenformen, bei der Beschreibung der Regelung nicht berücksichtigt werden. Dies ist sinnvoll, da vorzugsweise der Antriebsmode die Schwingungsform ist, bei der das Gerät in Resonanz betrieben wird, Somit ist diese Schwingungsform bestimmend für die Regelung in den Arbeitspunkt.

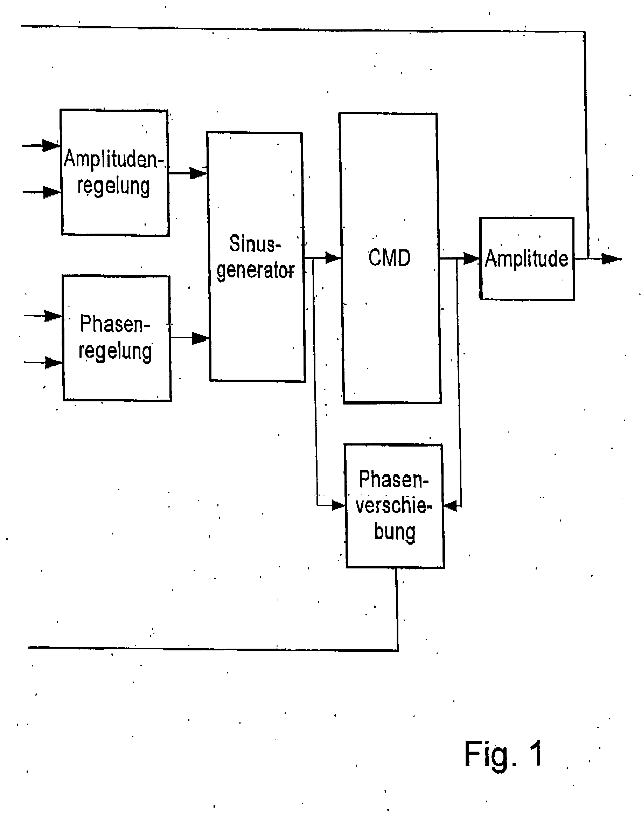

Bei der erzwungenen Anregung wird der Antrieb des Meßrohres gemäß dem vorliegend beschriebenen bevorzugten Ausführungsbeispiel der Erfindung über einen gesteuerten Generator gespeist, wie aus Figur 1 ersichtlich. Die Steuerung des Generators erfolgt dabei derart, daß die Phase zwischen der kraftproportionalen Anregung des Meßrohres und dessen geschwindigkeitsproportionaler Antwort Null ist. Darüber hinaus wird die Amplitude des Geschwindigkeitssignals vorgegeben und konstant gehalten.

Bei herkömmlichen Anwendungen wurde bei der Phasenregelung davon ausgegangen, daß die Frequenz des Ausgangssignals des Antriebsmodes gleich der Frequenz des Anregungssignals ist. Diese Annahme wird bei der vorliegenden Erfindung fallen gelassen, da sie nur unter der Voraussetzung gilt, daß sich das Meßrohr in einem quasistatiönären Zustand befindet, der bei einer mehrphasigen Strömung im allgemeinen nicht vorliegt. Bei Zustandsübergängen setzt sich das Ausgangssignal wenigstens aus der Überlagerung des gedämpften Resonanzfrequenzsignals und des erzwungenen Anregungssignals zusammen. Es gilt also:

$$v_1(t) = A\sin(\omega t + \varphi) + Be^{-\omega_{01}Dt}\sin(\omega_{01}t) \qquad (3)$$

Dabei ist $\omega$ die Frequenz der erzwungenen Anregung, und die Parameter A und B sind im allgemeinen eine Funktion der Eigenschaften des Massendurchflußgerätes und des das Massendurchflußgerät durchströmenden Fluids. Das Ausgangssignal (Gleichung 3), enthält Informationen über die Lage der aktuellen Resonanzfrequenz. Diese wird bei herkömmlichen autonom betriebenen Massendurchflußgeräten ausgenutzt, bei denen keine erzwungene Schwingung vorliegt, sondern das Anregungssignal aus autonomen Schwingungen abgeleitet wird. Damit entfällt bei der autonomen Anregung der Term $A\sin(\omega t+\varphi)$ im Ausgangssignal.

Bei dem vorliegenden Fall der erzwungenen Anregung werden verschiedene Verfahren eingesetzt, um die Phasenregelung zu beschleunigen. Diesen Verfahren ist gemein, daß die Lage der aktuellen Resonanzfrequenz bei der Regelung berücksichtigt wird. Dies kann nach verschiedenen Verfahren erfolgen, von denen nachfolgend zwei verschiedene beschrieben werden:

Gemäß einem ersten bevorzugten Verfahren wird das Ausgangssignal, wie bei einer herkömmlichen erzwungenen Anregung, demoduliert. Hierzu wird das Ausgangssignal mit den bekannten generierten Anregungssignalen multipliziert:

$$v_1(t)\sin(\omega t) = A\sin(\omega t + \varphi)\sin(\omega t) + Be^{-\omega_{01}Dt}\sin(\omega_{01}t)\sin(\omega t)$$
$$\frac{A}{2}[\cos(\varphi) + \underbrace{\cos(2\omega t + \varphi)]}_{Ausfiltern} + \frac{B}{2}e^{-\omega_{01}Dt}[\cos(\omega_{01} - \omega)t + \underbrace{\cos(\omega_{01} + \omega)t]}_{Ausfiltern}$$
$$(4)$$

$$v_1(t)\cos(\omega t) = A\sin(\omega t + \varphi)\cos(\omega t) + Be^{-\omega_{01}Dt}\sin(\omega_{01}t)\cos(\omega t)$$
$$\frac{A}{2}[\sin(\varphi) + \underbrace{\sin(2\omega t + \varphi)]}_{Ausfiltern} + \frac{B}{2}e^{-\omega_{01}Dt}[\sin(\omega_{01} - \omega)t + \underbrace{\sin(\omega_{01} + \omega)t]}_{Ausfiltern}$$
$$(5)$$

Die Doppelfrequenzanteile in diesen Gleichungen werden mit Hilfe eines Tiefpaßfilters ausgefiltert, Die Signalanteile mit der Differenz der erzwungenen Antriebsfrequenz und der aktuellen Resonanzfrequenz werden jedoch weiterverarbeitet. Die tatsächlich ausgerechnete Phase, nämlich der Ausgang des Phasendetektors, wird von den gefilterten Signalen berechnet. Sie lautet:

$$\phi_{berechnet} = arctan\left[\frac{\frac{A}{2}cos(\varphi) + \frac{B}{2}e^{-\omega_{01}Dt}cos(\omega_{01} - \omega)t}{\frac{A}{2}sin(\varphi) + \frac{B}{2}e^{-\omega_{01}Dt}sin(\omega_{01} - \omega)t}\right] \tag{6}$$

Dieses Ergebnis kann man folgendermaßen zusammenfassen: Im quasistationären Zustand kann die berechnete Phase mit der tatsächlichen Phasenverschiebung durch das Meßrohr übereinstimmen. Beim Übergang von einem quasistationären Zustand zu einem anderen quasistationären Zustand wandert die Phase mit einer Geschwindigkeit, die eine Funktion der Frequenzdifferenz zwischen der Anregungsfrequenz und Resonanzfrequenz ist. Diese wichtige Information über den Abstand der Anregungsfrequenz und der aktuellen Resonanzfrequenz wird ausgenutzt, um die Geschwindigkeit der Phasenregelung zu erhöhen. Dies beschleunigt das Anfahren der neuen Anregungsfrequenz und die Ausregelung der Phasenverschiebung auf Null. Damit wird verhindert, daß die Meßrohrschwingung ausfällt.

Gemäß einem zweiten bevorzugten Verfahren wird entsprechend der Änderungsgeschwindigkeit der Phase ein Signal der Funktion der Differenzfrequenz der erzwungenen Antriebsfrequenz und der aktuellen Resonanzfrequenz generiert und bei der Regelung als Information über die Lage der aktuellen Resonanzfrequenz zugeführt,

Die Ausnutzung der parametriechen Anregung, bedingt durch die Mehrphasenströmung, macht es möglich, die aktuelle Resonanzstelle gezielt und schnell anzufahren, bevor die Antwort der parametrischen Anregung abgeklungen ist. Dies verhindert den Verlust des optimalen Arbeitspunktes und macht einen Neustart und eine erneute zeitraubende Suche des Arbeitspunktes überflüssig. Damit kann auch bei den Übergängen zwischen verschiedenen quasistationären Zuständen der Massendurchfluß gemessen werden.

Regt man das Meßrohr in seiner Resonanzfrequenz an, so ist die Anregung proportional der Ausgangsgeschwindigkeit des Antriebsmodes. Dies bedeutet, daß die Anregung - quasistadonär betrachtet - zur Abdeckung der, geschwindigkeitsproportionalen Verluste dient, Diese Verluste sind abhängig von den Stofreigenschaften und von der Zusammensetzung der Strömung, Um eine gewünschte Amplitude des Geschwindigkeitssignals unabhängig von Störungen konstant zu halten, wird eine Amplitudenregelung, wie im folgenden beschrieben, durchgeführt:

Die Amplitude wird sehr schnell gemessen, nämlich innerhalb weniger als einer halben Periodendauer. Dabei erfolgt die Messung gemäß dem vorliegend beschriebenen bevorzugten Ausführungsbeispiel der Erfindung nach dem Verfahren der absoluten Maximasuche oder nach dem Gradientenverfahren. Bei der ersten Methode wird der höchste betragsmäßige Abtastwert innerhalb einer halben Periode, bevorzugt rekursiv, festgestellt. Bei dem zweiten Verfahren wird der Maximalwert beim betragsmäßigen Minimum des Gradienten des Geschwindigkeitssignals bestimmt. Eine gewichtete Kombination aus den Bestimmungen der beiden Verfahren kann ebenfalls verwendet werden.

Weiterhin wird die Stellgröße der Amplitudenregelung so verändert, daß die Impulse der strömenden Massenteilchen sich nicht sprunghaft verändern. Dies verringert die Störung der Strömung zum Zwecke der Messung und erhöht die Effizienz der Antriebsleistung bzw. der Bremsleistung, da dann ein möglichst rein sinusförmiges Antriebssignal mit geringem Oberwellenanteil verwendet wird. Um dies zu erreichen, wird die Amplitude des Antriebssignals bevorzugt bei, zumindest aber in der Nähe der Nulldurchgänge des Arbeitssignals geändert.

Bei der autonomen Anregung wird davon ausgegangen, daß sich eine autonome Schwingung am Ausgangssignal etabliert hat, die im allgemeinen auf einer breitbandigen additiven oder während des Betriebes auf einer multiplikativen, d. h. parametrischen Anregung beruht. Das Ausgangssignal enthält aufgrund der Filterwirkung der Mechanik mit einer Bandpaßeigenschaft bevorzugt Signale der Frequenz der Resonanzstelle und kann durch folgende Gleichung beschrieben werden:

$$v_1(t) = Ae^{-\omega_{01}Dt}sin(\omega_{01}t) \tag{7}$$

Die Parameter A und D sind im allgemeinen eine Funktion der Eigenschaften des Coriolis-Massendurchflußgerätes und des durchströmenden Fluids.

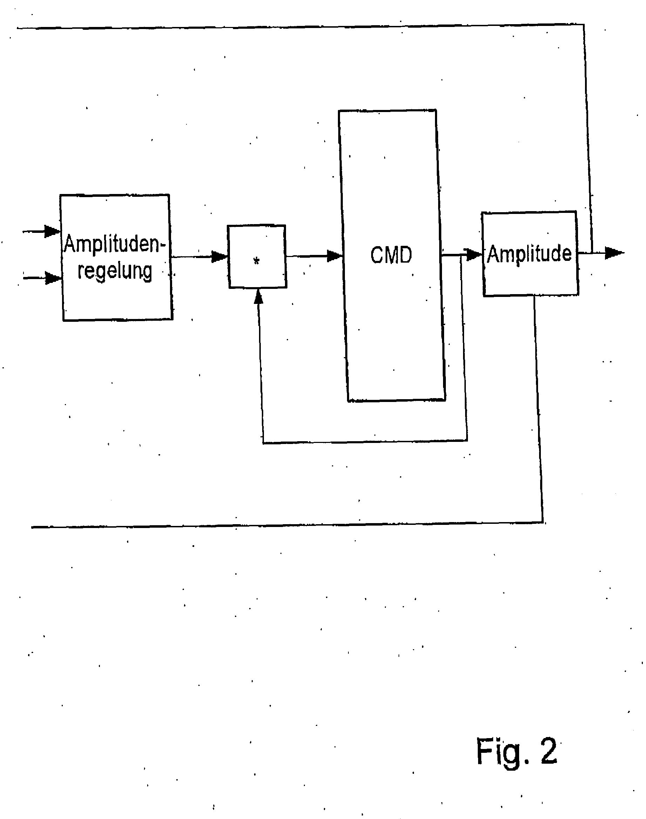

Das Ausgangssignal entsprechend Gleichung 7 enthält Information über die Lage der aktuellen Resonanzfrequenz $\omega_{01}$. Dieses Signal wird bei herkömmlich autonom betriebenen Massendurchflußmeßgeräten zur Anregung des Meßrohres ausgenutzt, Das bedeutet, daß keine erzwungene Schwingung vorliegt, sondern das Anregungssignal bevorzugt aus autonomen Schwingungen abgeleitet wird, wie z. B. Figur 2 entnehmbar. Bei einer weiteren bevorzugten Realisierung werden Störungen, die sich aus autonomen Schwingungen überlagern, zusätzlich mit einem Filter spezieller Eigenschaften, wie Bandpaß-Eigenschaften, unterdrückt.

Damit entfällt bei der autonomen Anregung ein Phasenregelkreis. Dies ist in sofern vorteilhaft, als daß die Lage der Resonanzfrequenz zu erzwungenen Anregung schnell der Regelung zugeführt werden kann. Nachteilig jedoch ist, daß die Resonanzfrequenz zum Zwecke der Messung der Dichte und des Durchflusses nachträglich genau bestimmt werden muß, Der Hauptnachteil liegt schließlich darin, daß die Lage der Resonanzfrequenz aufgrund der Störungen, beispielsweise durch mehrphasige Strömungen, verlorengehen kann. Dies kann dann auftreten, wenn sich die Dämpfung schnell erhöht und die gesamte im Schwinger vorhandene gespeicherte Energie derart rasch dissipiert, daß das Ausgangssignal im ungünstigsten Fall nahezu aperiodisch abklingt. Da in diesem Fall eine erzwungene Anregung zur Identifikation der Resonanzfrequenz nicht vorhanden ist, fehlt dem System jegliche Information über die Resonanzfrequenz, und das Coriolis-Massendurchflußmeßgerätes kann den Arbeitspunkt nicht einstellen, so daß auch keine Messung des Durchflusses durchgeführt werden kann. Bei herkömmlichen Coriolis-Massendurchflußmeßgeräten ist dann ein Neustart mit einer erzwungenen Anregung währen der Startphase erforderlich, was nicht unerheblich Zeit kostet.

Diese Vorgehensweise ist bei raschen Änderungen der Strömungsverhältnisse, wie bei Strömungen mit nichtstationären Phasen nicht sicher anwendbar. Zur Lösung dieser Problematik werden vorliegend zwei Verfahren angewandt:

Das erste Verfahren verwendet eine schnelle Amplitudenregelung, wie zuvor bescinieben. Als Amplitudenregler können dabei verschiedene Reglertypen, wie PI, PID-VZ1 usw, eingesetzt werden. Dabei wird vorzugsweise ein digitaler Kompensationsregeler verwendet, der die Dämpfungsverluste des Antriebsmodes kompensiert. Vorzugsweise wird folgendes Regelgesetz verwendet:

$$u_k = u_{k-1} + p(w_k - y_k) + y_{k-2} + y_{k-} \tag{8}$$

wobei u der Ausgang des Reglers ist, p der Verstärkungsfaktor ist, w der Sollwert der Amplitude ist und y der Istwert der Amplitude ist.

Das zweite, alternativ verwendbare Verfahren ist eine hybride Regelung, die eine Kombination der beiden Regelungen mit erzwungener Anregung bzw. mit autonomer Anregung, verwendet. Damit wird sichergestellt, daß die Vorteile der beiden Verfahren gemeinsam ausgenutzt werden können. Bei einer bevorzugten Realisierung wird abhängig von der Frequenzdifferenz zwischen der erzwungenen und der aktuellen Resonanzfrequenz, detektiert wie zuvor im Zusammenhang mit der Phasenregelung beschrieben, ein Teil des Ausgangssignals direkt rückgekoppelt.

Das Zeitverhalten von Coriolis-Massendurchflußmeßgeräten wird u. a. durch zwei Parameter beeinflußt, nämlich der Sample-Rate und den Gruppenlaufzeiten, also den Totzeiten in den Hardware-Komponenten. Untersuchungen des Verhaltens des Phasen- und Amplitudenregelers zeigen, daß das Regelverhalten von der Abtastrate abhängt, wobei der Phasenregelkreis empfindlicher ist als der Amplitudenregelkreis. Je größer die Abtastfrequenz ist, desto geringer ist die Ausregelzeit. Ab Abtastraten von 8 kHz flacht die Verbesserung ab, so daß bei ca. 100 kHz keine signifikante Verbesserung mehr festgestellt werden kann.

Betrachtet man die Übertragungsfunktion des Antriebsmodes vereinfacht, d. h. ohne Berücksichtigung der Koppelung der anderen Moden als eine lineares System zweiter Ordnung und berücksichtigen man dabei die Totzeiten, z. B. von A/D-Wandler und D/A-Wandler, mit $T_d$, so lautet die Übertragungsfünktion:

$$G_1(s) = \frac{k_1 s}{s^2 + 2\omega_{01} d_1 s + \omega_{01}^2} e^{-T_d t} \tag{9}$$

Ohne Totzeit ist die Regelstrecke für alle proportionalen Rückkoppelungen stabil. Läßt man jedoch Totzeiten zu, so beeinflussen die Totzeiten die Amplituden-und Phasenreserve und damit das dynamische Verhalten des Regelkreises, so daß sich abhängig von den Parametern der Übertragungsfunktion instabile Regelstrecken ergeben können. Die Stabilität geschlossener Regelstrecken ist von den Parametern und ihren Änderungsgeschwingikeiten abhängig. Bei der Untersuchung der schnellen Paranieterhänderungen, die bei Zweiphasenströmungen immer auftreten, kann sich die eingestellte Phasen- und Amplitudenreserve sehr schnell reduzieren, so daß eine Schwingungsneigung zustande kommt.

In Coriolis-Massendurchflusemessgeräten liegen zwei nichtlineare, sehr stark miteinander gekoppelte Regelkreise vor, deren dynamisches Zeitverhalten analytisch nicht vorliegt. Daher wird zur ersten Orientierung experimentell der Einfluß der Totzeit an den beiden Regelkreisen untersucht. Hierzu wurden Totzeitglieder mit variablen Totzeiten vor dem D/A-Wandler bzw. nach dem A/D-Wandler eingebaut. Bei den Untersuchungen wurde die Totzeit variiert, und es sind verschiedene Sprungantworten aufgenommen worden. Als Resultat kann festgehalten werden, daß bei einer gegebenen - z. B. durch den D/A-Wandler bzw. den A/D-Wandler verursachten - Totzeit, diese bevorzugt softwareseitig verlängert und angepaßt werden kann. Damit können erfindungsgemäß die Stabilität und das dynamische Verhalten der Regelkreise verbessert werden.

Wie zuvor beschrieben, ist eine sorgfältige Betrachtung der Gruppenlaufzeit bzw. Totzeit in den Regelkreisen für die Stabilität des Systems erforderlich. Insbesondere im Fall von Parameteränderungen, wie sie zum Beispiel bei Zweiphasenströmungen auftreten, muß sichergestellt werden, daß die Totzeiten zusammen mit den veränderlichen Systemparametern immer zu stabilen Regelkreisen fuhren. Weiterhin ist es wichtig, eine möglichst kleine Totzeit zu verwenden, damit eine schnelle Regelung - insbesondere eine schnelle Ausregelung von Störungen - realisiert werden kann.

Für eine robuste Stabilität, d. h. eine große Phasen- und Amplitudenreserve, ist es wichtig, die Totzeit geeignet zu wählen und zu beeinflussen. Dies kann z. B. durch folgende Maßnahmen erfolgen:

- Auswahl von A/D- und bzw. D/A-Wandlern mit möglichst geringer Gruppenlaufzeit,

- Verwendung von getrennten A/D- und bzw. D/A-Wandlern für die Regelung einerseits und Messung von Strömungseigenschaften andererseits oder Verwendung von A/D- und D/A-Wandlern mit getrennten Filterstufen oder Filtern mit internen Abgriffen für getrennte Signale mit unterschiedlichen Zeitkonstanten für die Regelung einerseits und Messung von Strömungseigenschaften andererseits,

- Verwendung einer möglichst hohen Abtastrate, um bei gegebener Gruppenlaufzeit von digitalen FIR-Filtern von A/D- und D/A-Wandlern eine möglichst geringe Totzeit zu erhalten und

- Verwendung von Pufferung in der Software, digitalen Filtern und rechnerischer Phasendrehung in der Software, um gezielt eine bestimmte Totzeit einzustellen, die zu einem stabilen und darüber hinaus schnellen Systemverhalten führt.

Die resultierende Totzeit, die sich aus der durch die Hardware fest vorgegebenen Totzeit und' der softwaremäßige zusätzlich eingeführten. Totzeit ergibt, kann dann fest an den Arbeitspunkt gekoppelt werden. Dies bedeutet, daß die zusätzliche Totzeit dynamisch an die Schwingungsperiode angepaßt wird. So kann die resultierende Totzeit zum Beispiel auf ein Vielfaches der halben Schwingungsperiodendauer eingestellt werden.

**Patentansprüche**

1. Verfahren zum Betreiben eines Coriolis-Massendurchflussmessgerätes, das wenigstens ein Meßrohr aufweist, wobei das Meßrohr mit einer vorbestimmten Anregungsfrequenz und einer vorbestimmten Anregungsphase zu Schwingungen angeregt wird, **dadurch gekennzeichnet, daß** die **dadurch** erzielte Antwortphase und die Änderungsgeschwindigkeit der Antwortphase erfaßt werden und die Anregungsfrequenz um einen derartigen Frequenzbetrag geändert wird, der sich mittels einer vorbestimmten Funktion aus der erfaßten Änderungsgeschwindigkeit der Antwortphase ergibt.

2. Verfahren nach Anspruch 1, **dadurch gekennzeichnet, daß** die Phasenverschiebung zwischen der Anregungsphase und der Antwortphase auf einen vorbestimmten Phasenwert geregelt wird,

3. Verfahren nach Anspruch 2, **dadurch gekennzeichnet, daß** der vorbestimmte Phasenwert Null beträgt.

4. Verfahren zum Betreiben eines Coriolis-Massendurchflüssmessgeräts, das wenigstens ein Meßrohr aufweist, wobei das Meßrohr mittels, eines Anregungssignals zu Schwingungen angeregt wird, das **dadurch** erzielte Schwingungssignal erfaßt und einer A/D-Wandlung unterzogen wird und das erfaßte Schwingungssignale verwendet wird, um wenigstens einen Parameter eines das Meßrohr durchströmenden Mediums zu bestimmen und um wenigstens einen Parameter der Schwingungsanregung festzulegen, **dadurch gekennzeichnet, daß** die A/D-Wandlung des Schwingungssignals zur Verwendung für die Bestimmung des Parameters des das Meßrohr durchströmenden Mediums von der A/D-Wandlung des Schwingungssignals zur Verwendung für die Festlegung des Parameters der Schwingungsanregung unabhängig ist.

5. Verfahren nach Anspruch 4, **dadurch gekennzeichnet, daß** die Zeitkonstate der A/D-Wandlung des Schwingungssignals zur Verwendung für die Bestimmung des Parameters des das Meßrohr durchströmenden Mediums von der Zeitkonstanten der A/D-Wandlung des Schwingungssignals zur Verwendung für die Festlegung des Parameters der Schwingungsanregung verschieden ist.

**6.** Verfahren nach Anspruch 4 oder 5, **dadurch gekennzeichnet, daß** die Grenzfrequenz der A/D-Wandlung des Schwingungssignals zur Verwendung für die Festlegung des Parameters der Schwingungsanregung größer ist als die Grenzfrequenz der A/D-Wandlung des Schwingungssignals zur Verwendung für die Bestimmung des Parameters des das Meßrohr durchströmenden Mediums.

**7.** Verfahren nach einem der Ansprüche 4 bis 6, **dadurch gekennzeichnet**, das zwei voneinander verschiedene A/D-Wandler oder ein A/D-Wandler mit getrennten Filterstufen oder mit inneren Abgriffen für getrennte Signale verwendet werden,

**8.** Verfahren zum Betreiben eines Coriolis-Massendurchflussmessgerätes, das wenigstens ein Meßrohr aufweist, wobei das Meßrohr mittels eines wenigstens zeitabschnittsweise periodischen analogen Anregungssignals zu Schwingungen angeregt wird, das **dadurch** erzielte analoge Antwortsignal erfaßt und mittels eines A/D-Wandlers einer A/D-Wandlung unterzogen wird, so daß ein digitales Antwortsignal bereitgestellt wird, das digitale Antwortsignal zur Bestimmung eines digitalen Anregungssignals verwendet wird und das digitale Anregungssignal einer D/A-Wandlung unterzogen wird, so daß sich das analoge Anregungssignal ergibt, **dadurch gekennzeichnet, daß** der jeweiligen gerätespezifischen Totzeit des A/D-Wandlers bzw. des D/A-Wandlers eine vorbestimmte zusätzliche Totzeit hinzugefügt wird.

**9.** Verfahren nach Anspruch 8, **dadurch gekennzeichnet, daß** wenigstens eine Totzeit derart eingestellt wird, daß sie einem ganzzahligen Vielfachen der halben. Periode des Anregungssignals entspricht.

**10.** Verfahren zum Betreiben eines Coriolis-Massendurchflussmessgerätes, das wenigstens ein Meßrohr aufweist, wobei das Meßrohr mittels eines periodischen Anregungssignals zu Schwingungen angeregt wird, das **dadurch** erzielte Schwingungssignal erfaßt wird und die Amplitude des Schwingungssignals mittels der Amplitude des Anregungssignals als Stellgröße auf einen vorbestimmten Wert geregelt wird, **dadurch gekennzeichnet, daß** die Amplitude des Anregungssignals bei den Nulldurchgängen des Anregungssignals eingestellt wird.

EP 1 876 428 A1

Fig. 1

10

Fig. 2

**Europäisches Patentamt**

**EUROPÄISCHER RECHERCHENBERICHT**

Nummer der Anmeldung

EP 07 01 3081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GB 2 332 519 A (ABB KENT TAYLOR LTD [GB] ABB KENT TAYLOR LTD [GB]; ABB INSTRUMENTATION) 23. Juni 1999 (1999-06-23) * Zusammenfassung; Abbildung 2 * * Seite 1, Zeile 1 - Seite 2, Zeile 2 * * Seite 3, Zeile 27 - Seite 6, Zeile 6 * ----- | 1-10 | INV. G01F1/84 |
| Y | SCHRÖDER, T.; KOLAHI, K.; RÖCK, H.: "Neuartige Frequenzregelung eines Coriolis-Massendurchflussmessers" XVII MESSTECHNISCHES SYMPOSIUM DES AHMT, SHAKER VERLAG, TAGUNGSBAND, [Online] 29. September 2003 (2003-09-29), - 1. Oktober 2003 (2003-10-01) Seiten 53-62, XP002455846 Darmstadt Gefunden im Internet: URL:http://www.tf.uni-kiel.de/etit/ART/paper/2003/ahmt2003.pdf> [gefunden am 2007-10-22] * Seite 1 - Seite 2 * * Seite 7 - Seite 9 * * Abbildung 3 * ----- | 1-10 | |
| A | US 4 801 897 A (FLECKEN PETER [DE]) 31. Januar 1989 (1989-01-31) * Zusammenfassung * * Spalte 2, Zeile 58 - Spalte 4, Zeile 68 * ----- | 1 | RECHERCHIERTE SACHGEBIETE (IPC) G01F |
| Y | US 2003/212509 A1 (HENRY MANUS P [GB] ET AL) 13. November 2003 (2003-11-13) * Absatz [0053] * * Absatz [0072] * * Absatz [0195] - Absatz [0203] * * Abbildung 4 * ----- -/-- | 4-10 | |

Der vorliegende Recherchenbericht wurde für alle Patentansprüche erstellt

| Recherchenort | Abschlußdatum der Recherche | Prüfer |
|---|---|---|
| München | 22. Oktober 2007 | Pisani, Francesca |

EPO FORM 1503 03.82 (P04C03)

Europäisches
Patentamt

**EUROPÄISCHER RECHERCHENBERICHT**

Nummer der Anmeldung

EP 07 01 3081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 480 019 A (HELIOS & ZASCHEL GMBH [DE]) 24. November 2004 (2004-11-24) <br> * Zusammenfassung; Abbildung 2 * <br> * Absatz [0015] * <br> ----- | 1-10 | |
| A | US 2001/039829 A1 (WENGER ALFRED [CH] ET AL) 15. November 2001 (2001-11-15) <br> * Absatz [0113] * <br> * Absatz [0122] - Absatz [0130] * <br> ----- | 1 | |
| A | US 2004/173031 A1 (GICZA SHLOMO [CA] ET AL) 9. September 2004 (2004-09-09) <br> * Absatz [0013] - Absatz [0014] * <br> ----- | 1 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 22. Oktober 2007 | Pisani, Francesca |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 3081

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2007

| Im Recherchenbericht angeführtes Patentdokument | | Datum der Veröffentlichung | Mitglied(er) der Patentfamilie | | Datum der Veröffentlichung |
|---|---|---|---|---|---|
| GB 2332519 | A | 23-06-1999 | EP | 0926473 A2 | 30-06-1999 |
| | | | GB | 2373336 A | 18-09-2002 |
| | | | US | 6332366 B1 | 25-12-2001 |
| US 4801897 | A | 31-01-1989 | DE | 8712331 U1 | 28-01-1988 |
| | | | DK | 507087 A | 27-03-1988 |
| | | | EP | 0262573 A2 | 06-04-1988 |
| | | | JP | 2751929 B2 | 18-05-1998 |
| | | | JP | 63278586 A | 16-11-1988 |
| US 2003212509 | A1 | 13-11-2003 | AU | 2003267954 A1 | 31-12-2003 |
| | | | DE | 10392459 T5 | 16-06-2005 |
| | | | GB | 2402486 A | 08-12-2004 |
| | | | GB | 2412437 A | 28-09-2005 |
| | | | GB | 2428090 A | 17-01-2007 |
| | | | WO | 03106931 A2 | 24-12-2003 |
| | | | US | 2003216874 A1 | 20-11-2003 |
| EP 1480019 | A | 24-11-2004 | DE | 10322763 A1 | 09-12-2004 |
| US 2001039829 | A1 | 15-11-2001 | US | 2005247116 A1 | 10-11-2005 |
| US 2004173031 | A1 | 09-09-2004 | KEINE | | |

EPO FORM P0461

Für nähere Einzelheiten zu diesem Anhang : siehe Amtsblatt des Europäischen Patentamts, Nr.12/82